# EUROPÄISCHE PATENTSCHRIFT

(11) **EP 3 544 870 B1**
(45) Veröffentlichungstag und Bekanntmachung des Hinweises auf die Patenterteilung: **20.10.2021**
(21) Anmeldenummer: 17807784.8
(22) Anmeldetag: 20.11.2017
(51) Int. Cl.: B60W 30/18, B60T 13/52

(54) **VERFAHREN ZUM BETREIBEN EINES KRAFTFAHRZEUGS UND KRAFTFAHRZEUG**
METHOD FOR OPERATING A MOTOR VEHICLE, AND MOTOR VEHICLE
PROCÉDÉ DE PERMETTANT DE FAIRE FONCTIONNER UN VÉHICULE AUTOMOBILE ET VÉHICULE AUTOMOBILE

(30) Priorität: 24.11.2016 DE 102016223279
(43) Veröffentlichungstag der Anmeldung: 02.10.2019
(73) Patentinhaber: Volkswagen Aktiengesellschaft, 38440 Wolfsburg (DE)
(72) Erfinder: WEISS, Norbert, 38173 Sickte (DE); THIAMTONG, Vasoontara, 38442 Wolfsburg (DE)
(86) Internationale Anmeldenummer: PCT/EP2017/079701
(87) Internationale Veröffentlichungsnummer: WO 2018/095832

(56) Entgegenhaltungen:
- EP-A1- 2 915 713
- EP-A2- 1 295 771
- DE-A1- 19 908 408
- DE-A1-102011 016 629
- DE-A1-102015 201 578
- DE-T5-112012 007 072
- US-A1- 2007 284 937

## Beschreibung

Die Erfindung betrifft ein Verfahren zum Betreiben eines Kraftfahrzeugs mit einem Verbrennungsmotor und einem Bremskraftverstärker. Die Erfindung betrifft weiterhin ein zur Durchführung eines solchen Verfahrens geeignetes Kraftfahrzeug.

In Kraftfahrzeugen kommen in der Regel Bremskraftverstärker zum Einsatz, die dazu dienen, eine von einem Fahrer des jeweiligen Kraftfahrzeugs auf ein Bremspedal ausgeübte Betätigungskraft zu verstärken, so dass ein definierter Bremsdruck mit relativ geringer Betätigungskraft erzeugt werden kann.

Bei kleineren Kraftfahrzeugen (PKW) kommen meistens Unterdruckbremskraftverstärker zum Einsatz, bei denen die Verstärkungswirkung auf einem pneumatischen Druckunterschied beruht. Dazu weist ein Unterdruckbremskraftverstärker eine Unterdruckkammer sowie eine Arbeitskammer auf, die mittels einer Membran voneinander separiert sind und in denen durch Evakuierung ein Druck erzeugt wird, der unterhalb des Umgebungsdrucks liegt. Die Membran ist mit einem in das hydraulische Bremssystem integrierten Kolben verbunden, wobei der Kolben (auch) durch eine Betätigung eines Bremspedals bewegt werden kann. Eine durch eine Betätigung des Bremspedals hervorgerufene Bewegung des Kolbens bewirkt zunächst ein Schließen eines Druckausgleichsventils, das im geöffneten Zustand die Unterdruckkammer und die Arbeitskammer zur Realisierung eines Druckausgleichs verbindet, und anschließend ein Öffnen eines Belüftungsventils, wodurch die Arbeitskammer mit der Atmosphäre verbunden wird. Demnach führt eine Betätigung des Bremspedals zu einer Erhöhung des pneumatischen Drucks in der Arbeitskammer und damit zu einem Druckunterschied zwischen der Arbeitskammer und der Unterdruckkammer des Bremskraftverstärkers. Die Wirkung dieses Druckunterschieds auf die Membran ist derart, dass die mittels des Bremspedals auf den Kolben des Bremssystems ausgeübte Betätigungskraft verstärkt wird. Wird das Bremspedal entlastet, schließt das Belüftungsventil wieder und das Druckausgleichsventil öffnet, so dass sich wiederum derselbe Druck innerhalb der Arbeits- und der Unterdruckkammer einstellt. Infolge der Belüftung der Arbeitskammer während der vorausgegangenen Betätigung des Bremspedals ist dieser Druck jedoch höher als vor der Betätigung, was durch eine erneute Evakuierung wieder ausgeglichen werden muss. Mit dieser Funktionalität eines Unterdruckbremskraftverstärkers geht somit einher, dass die Arbeitskammer und die Unterdruckkammer regelmäßig oder kontinuierlich evakuiert werden müssen.

Bei Kraftfahrzeugen mit Ottomotor wird der Unterdruck für einen Bremskraftverstärker in der Regel durch eine fluidleitende Verbindung zwischen der Unterdruckkammer und/oder der Arbeitskammer einerseits und einem Ansaugabschnitt eines Frischgasstrangs des Ottomotors andererseits erzeugt. Bei Kraftfahrzeugen mit Dieselmotor sowie bei Kraftfahrzeugen mit (teil-)elektrifiziertem Antriebsstrang, d.h. bei Elektro- oder Hybridfahrzeugen, kommen dagegen zumeist separate Unterdruckerzeuger, die als Unterdruckpumpen bezeichnet werden, zum Einsatz. Diese Unterdruckpumpen sind bei konventionellen Kraftfahrzeugen mit Dieselmotor in der Regel mechanisch, d.h. von dem Dieselmotor selbst, und bei Elektro- oder Hybridfahrzeugen häufig elektromotorisch angetrieben.

Bei Kraftfahrzeugen mit automatischen Schaltgetrieben etablieren sich in zunehmendem Maße sogenannte Freilauffunktionen, die dadurch gekennzeichnet sind, dass bei rollendem Kraftfahrzeug der Verbrennungsmotor durch das Öffnen der Kupplung von dem Antriebsstrang entkoppelt wird, wodurch verhindert wird, dass der andernfalls mitgeschleppte Verbrennungsmotor zu einer Verzögerung während des Ausrollens des Kraftfahrzeugs führt. Der Verbrennungsmotor wird dabei entweder abgeschaltet (unbefeuerter Stillstand) oder läuft im Leerlauf weiter. Ersteres wird als "Segeln" des Kraftfahrzeugs oder als "Freilauf Motor aus" bezeichnet, während für die zweite Variante häufig der Begriff "Leerlaufsegeln" oder "Freilauf" beziehungsweise "Freilauf Motor an" genutzt wird.

Ein Problem, dass sich bei einem Segeln eines Kraftfahrzeugs (bzw. "Freilauf Motor aus") stellt, ist die Aufrechterhaltung eines Unterdrucks in erforderlicher Höhe in dem Bremskraftverstärker, weil dann weder der Ansaugabschnitt des Frischgasstrangs noch eine mechanisch angetriebene Unterdruckpumpe als "Unterdruckquelle" zur Verfügung stehen. Für diesen Fall bietet sich die Verwendung einer elektromotorisch angetriebenen Unterdruckpumpe zur Evakuierung eines Bremskraftverstärkers an, was jedoch mit Kosten verbunden ist, die erheblich über der Realisierung einer Evakuierung durch einen Anschluss an den Ansaugabschnitt eines Frischgasstrangs oder auch mittels einer mechanisch angetriebenen Unterdruckpumpe liegen. Hinzu kommt der Energieverbrauch einer elektromotorisch angetriebenen Unterdruckpumpe.

Alternativ dazu ist in der DE 10 2010 031 036 A1 offenbart, dass für ein Kraftfahrzeug mit einer mechanisch angetriebenen Unterdruckpumpe eine Erzeugung eines Unterdrucks in einem Bremskraftverstärker auch dadurch realisiert werden kann, dass während des Segelns temporär nach einer Betätigung des Bremspedals die den Verbrennungsmotor mit dem Antriebsstrang verbindende Kupplung geschlossen wird, wodurch der Verbrennungsmotor unbefeuert mitgeschleppt und damit auch die Unterdruckpumpe angetrieben wird.

Die DE 10 2008 050 286 A1 offenbart ein Verfahren zur Steuerung einer Brennkraftmaschine in einem Kraftfahrzeug mit einem Start-/Stopp-System. Um verlängerte Startzeiten beziehungsweise hohen Verschleiß bei erhöhtem Schleppmoment der Brennkraftmaschine zu vermeiden, wird beim Stillsetzen der Brennkraftmaschine das Schleppmoment bestimmt und dem Wiederstart und/oder bei der Durchführung erneuter Start-/Stopp-Zyklen zugrunde gelegt. Während des Stillsetzens der Brennkraftmaschine kann die Drosselklappe der Brennkraftmaschine geschlossen werden, wodurch eine Verbesserung des Geräuschpegels während der Stillsetzung der Brennkraftmaschine erzielt werden kann.

Die DE 10 2011 085 628 A1 beschreibt ein Verfahren zum Betreiben einer Brennkraftmaschine eines Kraftfahrzeugs, bei dem ein ausreichender Unterdruck in einem Ansaugkrümmer bereitgestellt werden soll, um einen Bremskraftverstärker sicher zu betreiben, indem Steuerzeiten verändert und die Motordrehzahl sowie eine AGR-Rate erhöht werden. Bei einem Fahrzeug mit Start-Stopp-Automatik soll zudem die Motordrehzahl von null bis zu einem Wert erhöht werden, bei dem der gewünschte Unterdruck bereitgestellt ist.

Die bislang unveröffentlichte deutsche Patentanmeldung 10 2015 110 404.0 offenbart ein Verfahren zum Betreiben eines Kraftfahrzeugs mit einem Verbrennungsmotor und einem Bremskraftverstärker, in dem ein Unterdruck durch eine fluidleitende Verbindung des Bremskraftverstärkers mit einem Abschnitt eines Frischgasstrangs des Verbrennungsmotors erzeugt werden kann, wobei zumindest zeitweise bei einer Zurücknahme einer Lastanforderung an den Verbrennungsmotor ein Segeln des rollenden Kraftfahrzeugs vorgesehen wird, indem eine Befeuerung des Verbrennungsmotors beendet und der Verbrennungsmotor von zumindest einem Teil eines Antriebsstrangs des Kraftfahrzeugs entkoppelt wird. Dabei ist vorgesehen, dass der unbefeuerte Verbrennungsmotor automatisch und temporär an zumindest einen Teil des Antriebsstrangs des Kraftfahrzeugs gekoppelt wird oder gekoppelt gehalten wird, um den Unterdruck in dem Bremskraftverstärker innerhalb eines Sollbereichs zu halten. Durch ein temporäres Mitschleppen des Verbrennungsmotors im unbefeuerten Betriebszustand wird von diesem Frischgas von dem Frischgasstrang in einen Abgasstrang gefördert, wodurch in dem Frischgasstrang ein Unterdruck erzeugt wird, der zur Evakuierung des Bremskraftverstärkers genutzt wird. Auf diese Weise kann trotz der Realisierung eines Segelns für das Kraftfahrzeug auf eine elektromotorisch angetriebene Unterdruckpumpe verzichtet werden.

Der Erfindung lag die Aufgabe zugrunde, bei einem Kraftfahrzeug, bei dem der Ansaugabschnitt eines Frischgasstrangs als Unterdruckquelle für einen Bremskraftverstärker genutzt wird, auf möglichst vorteilhafte Weise einen ausreichenden Unterdruck in dem Bremskraftverstärker auch in Verbindung mit einem Segeln des Kraftfahrzeugs zu realisieren.

Diese Aufgabe wird mittels eines Verfahrens zum Betreiben eines Kraftfahrzeugs gemäß dem Patentanspruch 1 gelöst. Ein zur Durchführung eines solchen Verfahrens geeignetes Kraftfahrzeug ist Gegenstand des Patentanspruchs 5. Vorteilhafte Ausführungsformen des erfindungsgemäßen Verfahrens und vorteilhafte Ausgestaltungen des erfindungsgemäßen Kraftfahrzeugs sind Gegenstände der weiteren Patentansprüche und/oder ergeben sich aus der nachfolgenden Beschreibung der Erfindung.

Bei einem Verfahren zum Betreiben eines Kraftfahrzeugs, das einen Verbrennungsmotor und einen Bremskraftverstärker umfasst, in dem ein Unterdruck (im Vergleich zu dem Umgebungsdruck) durch eine Verbindung des Bremskraftverstärkers mit einem zwischen einem Frischgasregelelement und dem Verbrennungsmotor liegenden Ansaugabschnitt eines Frischgasstrangs des Verbrennungsmotors erzeugt werden kann, wobei zumindest zeitweise bei einer (insbesondere vollständigen) Zurücknahme einer Lastanforderung an den Verbrennungsmotor ein Segeln des rollenden Kraftfahrzeugs (bzw. "Freilauf Motor aus") vorgesehen wird, indem eine Befeuerung des Verbrennungsmotors beendet und der Verbrennungsmotor von zumindest einem (und insbesondere von dem Antriebsräder umfassenden) Teil des Antriebsstrangs des Kraftfahrzeugs abgekoppelt wird, ist erfindungsgemäß vorgesehen, dass bei der Initiierung des Segelns und/oder bei einem Anschleppen des unbefeuerten Verbrennungsmotors ausgehend von einem Segeln, wobei dieses Anschleppen mit dem Zweck der Verzögerung des Kraftfahrzeugs oder mittels einer Anschleppvorrichtung erfolgt, die Drosselklappe weitestmöglich geschlossen wird oder geschlossen gehalten wird, um den Druck in dem Bremskraftverstärker innerhalb eines Sollbereichs zu halten .

Der Erfindung liegt dabei einerseits der Gedanke zugrunde, dass mit einem Beenden der Befeuerung des (Hubkolben-)Verbrennungsmotors mit dem Ziel, ein Segeln des Kraftfahrzeugs zu erreichen, eine Abtriebswelle (Kurbelwelle) des Verbrennungsmotors noch eine gewisse Zeit rotiert, nachdem die Befeuerung, d.h. ein Einbringen von Kraftstoff in die Brennräume und/oder das Erzeugen von Zündfunken in den Brennräumen, beendet wurde und das diese noch andauernde Rotation der Abtriebswelle des Verbrennungsmotors infolge von entsprechend andauernden zyklischen Bewegungen von Kolben in Zylindern des Verbrennungsmotors zu einer ebenfalls andauernden Förderung von Frischgas aus dem Ansaugabschnitt des Frischgasstrangs durch die Brennräume bis in einen Abgasstrang des Verbrennungsmotors führt, wobei dieses Fördern von Frischgas zur Erzeugung eines Unterdrucks in dem Ansaugabschnitt des Frischgasstrangs genutzt werden kann, wenn durch ein weitestmögliches Schließen oder Geschlossenhalten des Frischgasregelelements ein Nachströmen von Frischgas in den Ansaugabschnitt weitestmöglich verhindert wird. Dabei wurde auch erkannt, dass ein solches Schließen oder Geschlossenhalten des Frischgasregelelements, das mit einem Beenden der Befeuerung zur Realisierung eines Segelns des Kraftfahrzeugs durchgeführt wird, ohne Nachteile für den sonstigen Betrieb des Kraftfahrzeugs erfolgen kann.

Der Erfindung liegt andererseits der Gedanke zugrunde, dass der Verbrennungsmotor auch bei einem Anschleppen im unbefeuerten Betriebszustand als Unterdruckquelle dienen kann, wobei weiterhin erkannt wurde, dass sich ein solches Anschleppen des Verbrennungsmotors im unbefeuerten Betriebszustand hinsichtlich des Betriebszustand des Segelns, in dem sich das Kraftfahrzeug befindet, wenn die entsprechende Maßnahme eingeleitet wird, nicht negativ auswirken muss. Dies gilt nämlich dann, wenn das Kraftfahrzeug ohnehin verzögert werden soll, was insbesondere durch die Betätigung eines Bremspedals signalisiert werden kann. Dann kann nämlich vorgesehen sein, dass Anschleppen zu bewirken, indem der unbefeuerte Verbrennungsmotor an den Antriebsstrang angekoppelt wird. Da insbesondere dann, d.h. bei beziehungsweise nach der Betätigung eines Bremspedals, eine Wiedererzeugung von Unterdruck in dem Bremskraftverstärker erforderlich oder zumindest vorteilhaft ist, ist ein solches ankoppelndes Anschleppen des Verbrennungsmotors ausgehend von einem Segeln mit dem Zweck der Verzögerung des Kraftfahrzeugs nicht nur ohne relevante Nachteile für den segelnden Betriebszustand des Kraftfahrzeugs, sondern die Erzeugung eines Unterdrucks in dem Bremskraftverstärker durch ein solches Anschleppen erfolgt auch zu einem möglichst optimalen Zeitpunkt. Hinzu kommt, dass ein solches Anschleppen des Verbrennungsmotors infolge einer Ankopplung an den Antriebsstrang des Kraftfahrzeugs zu einer Verzögerungswirkung führt, durch die, da eine Verzögerung ohnehin vorgesehen ist, der Verschleiß einer Betriebsbremse des Kraftfahrzeugs reduziert werden kann.

Andererseits besteht auch die Möglichkeit, ein Anschleppen des unbefeuerten Verbrennungsmotors mittels einer Anschleppvorrichtung, beispielsweise mittels eines sogenannten Anlassers oder Starter-Generators, zu bewirken. Auch dadurch wird der segelnde Betriebszustand des Kraftfahrzeugs nicht negativ beeinflusst. Ein solches Anschleppen des unbefeuerten Verbrennungsmotors kann bei einem Kraftfahrzeug mit mehr als einem Antriebsmotor, wie insbesondere einem zusätzlich mindestens einen elektrischen Antriebsmotor umfassenden Hybridfahrzeug, von dem in den Antriebsstrang integrierten weiteren Antriebsmotor, insbesondere dem elektrischen Antriebsmotor, bewirkt werden, während der Verbrennungsmotor und gegebenenfalls auch der weitere Antriebsmotor (insbesondere der elektrische Antriebsmotor) von den antreibbaren Rädern des Kraftfahrzeugs entkoppelt ist/sind.

Durch die erfindungsgemäßen Maßnahmen kann eine Erzeugung oder Aufrechthaltung von einem innerhalb eines Sollbereichs liegend vorgesehen (Unter-)Druck in dem Bremskraftverstärker auch dann erreicht werden, wenn während eines Segelns des Kraftfahrzeugs ein den Bremskraftverstärker umfassendes Bremssystem (auch mehrfach) betätigt wird, was grundsätzlich ein (gegebenenfalls auch mehrfaches) Wiedererreichen eines innerhalb des Sollbereichs liegenden (Unter-)Drucks in dem Bremskraftverstärker bedingt, ohne dass der Verbrennungsmotor in einen befeuerten Betriebszustand versetzt werden müsste, was zu einer ungewollten, weil den Kraftstoffverbrauch des Kraftfahrzeugs potentiell erhöhenden Beendigung des Segelns führen würde.

Ein erfindungsgemäßes (vorzugsweise radbasiertes) Kraftfahrzeug (insbesondere Pkw oder Lkw) umfasst zumindest einen Verbrennungsmotor, eine automatisch betätigbare Kupplung, mittels der der Verbrennungsmotor mit einem Antriebsstrang des Kraftfahrzeugs bedarfsweise koppelbar ist, eine Lastanforderungsvorrichtung (insbesondere ein Fahrpedal) zur Steuerung der Lastanforderung an den Verbrennungsmotor (insbesondere durch einen Fahrer des Kraftfahrzeugs), einen Bremskraftverstärker, in dem ein Unterdruck (im Vergleich zu dem Umgebungsdruck) durch eine Verbindung (einer Unterdruckkammer) des Bremskraftverstärkers mit einem zwischen einem Frischgasregelelement und dem Verbrennungsmotor liegenden Ansaugabschnitt eines Frischgasstrangs für den Verbrennungsmotor erzeugbar ist (und bei einem temporären Überdruck in dem entsprechenden Abschnitt des Frischgasstrangs auch gehalten werden kann, beispielsweise durch die Integration eines Rückschlagventils in die Verbindung). Ein erfindungsgemäßes Kraftfahrzeug umfasst weiterhin eine Steuervorrichtung (bei der es sich insbesondere um eine Motorsteuerung oder eine Getriebesteuerung des Kraftfahrzeugs handeln kann), wobei mittels der Steuervorrichtung zumindest zeitweise bei einer (insbesondere vollständigen) Zurücknahme der Lastanforderung mittels der Lastanforderungsvorrichtung ein Segeln des rollenden Kraftfahrzeugs vorgesehen wird, indem eine Befeuerung des Verbrennungsmotors beendet und der Verbrennungsmotor von zumindest einem Teil des Antriebsstrang durch ein Öffnen der Kupplung entkoppelt wird. Bei einem solchen Kraftfahrzeug ist dem erfindungsgemäßen Verfahren entsprechend vorgesehen, dass mit einem Beenden der Befeuerung des Verbrennungsmotors mit dem Ziel eines Segelns des Kraftfahrzeugs und/oder bei einem unbefeuerten Anschleppen des Verbrennungsmotors ausgehend von einem solchen Segeln, wobei dieses Anschleppen mit dem Zweck der Verzögerung des Kraftfahrzeugs oder mittels einer Anschleppvorrichtung erfolgt, das Frischgasregelelement weitestmöglich geschlossen wird oder geschlossen gehalten wird.

Die erfindungsgemäßen Maßnahmen können grundsätzlich soweit wirksam sein, dass auf einen separaten Unterdruckerzeuger (d.h. eine so genannte "Unterdruckpumpe") verzichtet werden kann. Demnach kann aus Kosten- und/oder Kraftstoffverbrauchsgründen das erfindungsgemäße Verfahren vorteilhafterweise bei einem Kraftfahrzeug zur Anwendung kommen, das keinen separaten Unterdruckerzeuger zur Erzeugung eines Unterdrucks in dem Bremskraftverstärker aufweist. Grundsätzlich besteht jedoch auch die Möglichkeit, ein erfindungsgemäßes Verfahren bei einem Kraftfahrzeug zur Anwendung kommen zu lassen, das einen solchen separaten Unterdruckerzeuger aufweist, wobei die Möglichkeit der ergänzenden Erzeugung eines Unterdrucks in dem Bremskraftverstärker durch die erfindungsgemäßen Maßnahmen in vorteilhafter Weise ermöglicht, den Unterdruckerzeuger unterdimensioniert auszubilden.

In einer bevorzugten Ausführungsform eines erfindungsgemäßen Verfahrens und in einer bevorzugten Ausgestaltungsform eines erfindungsgemäßen Kraftfahrzeugs kann vorgesehen sein, dass das Frischgasregelelement nach einem Erreichen eines unteren (relativ kleinen) Grenzwerts des Sollbereichs (teilweise oder weitestmöglich) geöffnet wird. Dadurch kann einerseits verhindert werden, dass der Druck in dem Bremskraftverstärker, in dem Ansaugabschnitt und/oder in der fluidleitenden Verbindung zwischen diesen Komponenten auf Werte absinkt, die so gering sind, dass diese Komponenten dafür strukturell nicht ausgelegt sind. Andererseits kann durch das Öffnen des Frischgasregelelement, nachdem keine weitere Unterdruckerzeugung mehr erforderlich ist, ein Nachströmen von Frischgas in den zuvor evakuierten Ansaugabschnitt des Frischgasstrangs erreicht werden, wodurch ein zu einem späteren Zeitpunkt anschließender Start des Verbrennungsmotors mit dem Ziel eines befeuerten Betriebs verbessert und insbesondere beschleunigt werden kann.

Die Ansteuerung des Frischgasregelelements im Rahmen der erfindungsgemäßen Maßnahmen zum Halten des Drucks in dem Bremskraftverstärker innerhalb des Sollbereichs und/oder auch die Dauer des unbefeuerten Anschleppens des Verbrennungsmotors ausgehend von einem Segeln kann vorzugsweise in Abhängigkeit von einem von dem Druck in dem Bremskraftverstärker abhängigen Druckmesswert gesteuert oder geregelt werden. Dabei kann eine Druckmessung insbesondere in dem Bremskraftverstärker selbst erfolgen. Möglich ist aber auch eine Druckmessung in einem mit dem Bremskraftverstärker beziehungsweise mit der Unterdruckkammer des Bremskraftverstärkers in fluidleitender Verbindung stehenden Hohlraum, beispielsweise in dem Ansaugabschnitt und/oder in einer den Ansaugabschnitt mit dem Bremskraftverstärker verbindenden Verbindungsleitung. Eine solche Druckmessung ist zum einen einfach umsetzbar, indem für ein erfindungsgemäßes Kraftfahrzeug ein entsprechender Drucksensor vorgesehen ist, der mit der Steuervorrichtung in signalleitender Verbindung steht. Zum anderen stellt eine solche Steuerung oder Regelung auf den tatsächlich relevanten Parameter, nämlich den pneumatischen (Unter-)Druck in dem Bremskraftverstärker ab, wodurch eine besonders genaue Steuerung oder Regelung ermöglicht ist.

Bei einem fremdgezündeten Verbrennungsmotor, insbesondere einem nach dem Otto-Prinzip betriebenen Verbrennungsmotor ("Ottomotor"), kann das Frischgasregelelement insbesondere eine Drosselklappe sein, die primär der Regelung der dem Verbrennungsmotor im befeuerten Betrieb zugeführten Frischgasmenge dient. Bei einem selbstzündenden Verbrennungsmotor, insbesondere einem nach dem Diesel-Prinzip betriebenen Verbrennungsmotor ("Dieselmotor"), kann es sich bei dem Frischgasregelelement insbesondere um das in der Regel als "Regelklappe" oder "Abstellklappe" bezeichnete Regelelement handeln, das primär dazu dient, den Dieselmotor nach einem Abstellen von einer weiteren Frischgaszufuhr abzuschneiden, wodurch insbesondere ein ungewolltes Nachlaufen des Dieselmotors verhindert werden soll. Bei dem Verbrennungsmotor des erfindungsgemäßen Kraftfahrzeugs kann es sich vorzugsweise um einen fremdgezündeten Verbrennungsmotor und insbesondere um einen Ottomotor handeln, weil der Frischgasstrang eines solchen Ottomotors in vorteilhafter Weise als Unterdruckquelle für einen Bremskraftverstärker dienen kann.

Die fluidleitende Verbindung zwischen dem Frischgasstrang des Verbrennungsmotors und dem Bremskraftverstärker kann insbesondere aus einem Saugrohr des Frischgasstrangs abgehen. Bei einem "Saugrohr" handelt es sich um den dem Verbrennungsmotor nächstgelegenen Abschnitt des Frischgasstrangs, in dem eine Aufteilung der Frischgasströmung auf Teilströmungen erfolgt, die den einzelnen Brennräumen (sofern mehrere vorhanden sind) des Verbrennungsmotors separat zugeführt werden.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand eines in den Zeichnungen dargestellten Ausführungsbeispiels näher erläutert. In den Zeichnungen zeigt, teilweise in schematischer Darstellung:
- Fig. 1:: ein erfindungsgemäßes Kraftfahrzeug;
- Fig. 2:: Komponenten einer Brennkraftmaschine des Kraftfahrzeugs;
- Fig. 3:: in einem Diagramm eine Betriebsphase eines erfindungsgemäßen Kraftfahrzeugs, in der eine Drosselklappe mit der Initiierung eines Segelns des Kraftfahrzeugs geschlossen wird; und
- Fig. 4:: in einem Diagramm eine Betriebsphase eines erfindungsgemäßen Kraftfahrzeugs, in der eine Drosselklappe bei einem Anschleppen eines Verbrennungsmotors ausgehend von einem Segeln des Kraftfahrzeugs geschlossen gehalten wird.

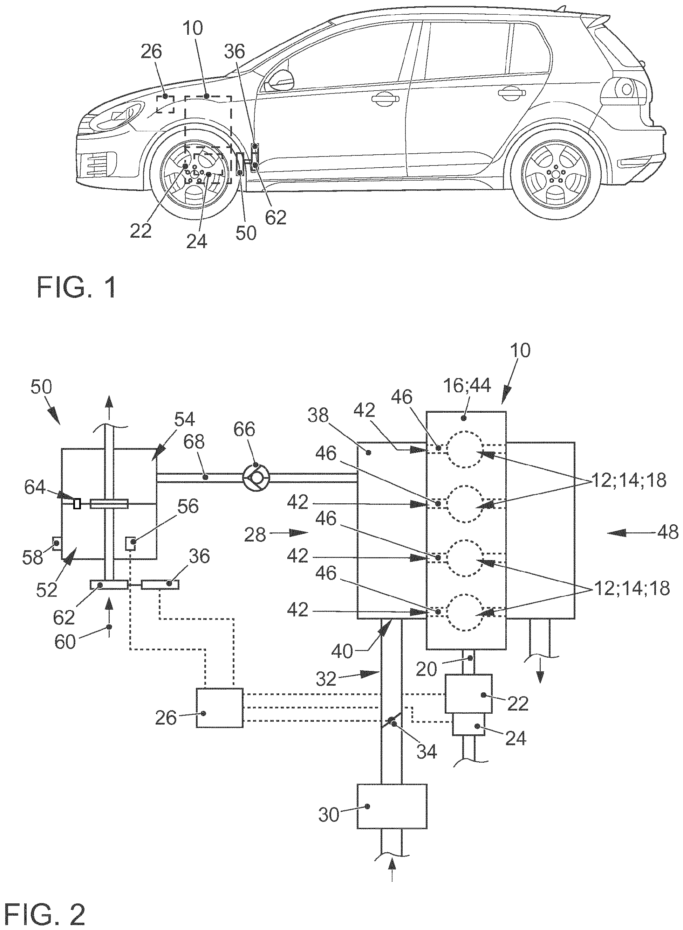

Das in der Fig. 1 dargestellte Kraftfahrzeug umfasst eine Brennkraftmaschine mit einem nach dem Otto-Prinzip betriebenen (Hubkolben-)Verbrennungsmotor 10, der der Bereitstellung der Fahrantriebsleistung für das Kraftfahrzeug dient. Dazu wird ein Kraftstoff-Frischgas-Gemisch in Brennräumen 12, die von Zylindern 14, die in einem Zylinderkurbelgehäuse 16 ausgebildet sind, von in den Zylindern 12 beweglich geführten Kolben 18 und von einem Zylinderkopf 44 des Verbrennungsmotors 10 begrenzt werden, verbrannt. Die so erzeugte Druckerhöhung in den Brennräumen 12 bewirkt eine lineare, zyklische Bewegung der Kolben 18 in den Zylindern 14, wobei diese Bewegungen der Kolben 18 mittels Pleuel (nicht dargestellt) in eine Rotation einer Kurbelwelle 20 übersetzt werden. Diese Rotation der Kurbelwelle 20 wird über ein automatisches Schaltgetriebe 22, das zumindest eine automatisch betätigbare Kupplung 24 umfasst (z.B. vollautomatisches Getriebe oder automatisiertes Handschaltgetriebe ("Halbautomatik")), auf zumindest eine angetriebene Achse des Kraftfahrzeugs übertragen. Eine Ansteuerung des Schaltgetriebes 22 und der Kupplung 24 beziehungsweise ihrer Aktoren erfolgt mittels einer Steuervorrichtung 26 des Kraftfahrzeugs.

Wie sich aus der Fig. 2 ergibt, wird dem Verbrennungsmotor 10 das Frischgas, bei dem es sich zum größten Teil oder ausschließlich um Umgebungsluft handeln kann, über einen Frischgasstrang 28 zugeführt. Der Frischgasstrang 28 integriert einen Luftfilter 30, durch den Verunreinigungen der Umgebungsluft herausgefiltert werden. Stromab des Luftfilters 30 schließt sich ein Abschnitt des Frischgasstrangs 28 an, in den ein Frischgasregelelement 34 in Form einer Drosselklappe 34 integriert ist. Mittels der Drosselklappe 34 kann der Strömungsquerschnitt in dem entsprechenden Abschnitt des Frischgasstrangs 28 mehr (bis hin zu einem möglichst vollständigen Verschließen) oder weniger (bis hin zu einem möglichst weitgehenden Freigeben) versperrt werden, wodurch in einem befeuerten Betrieb des Verbrennungsmotors 10 eine Regelung der den Brennräumen 12 zugeführten Frischgasmenge und damit eine Leistungsregelung des Verbrennungsmotors 10 realisiert werden kann. Eine Ansteuerung der Drosselklappe 34 beziehungsweise eines dazugehörigen Aktors (nicht dargestellt) erfolgt wiederum mittels der Steuervorrichtung 26 in Abhängigkeit von der Stellung einer Lastanforderungsvorrichtung in Form eines Fahrpedals 36, das von einem Fahrer des Kraftfahrzeugs betätigt werden kann, um eine konkrete Lastanforderung und damit eine definierte Beschleunigung oder Fahrgeschwindigkeit für das Kraftfahrzeug anzufordern.

Ein stromab der Drosselklappe 34 liegender Ansaugabschnitt 32 des Frischgasstrangs 28 umfasst ein Saugrohr 38, in dem die Frischgasströmung auf eine der Anzahl an Brennräumen 12 entsprechende Anzahl an Teilströmungen aufgeteilt wird. Das Saugrohr 38 bildet dazu einen einzelnen Frischgaseinlass 40 und jeweils einen Frischgasauslass 42 für jeden der Zylinder 14 aus. Jeder der Frischgasauslässe 42 geht in einen von dem Zylinderkopf 44 des Verbrennungsmotors 10 ausgebildeten Einlasskanal 46 über, durch den die jeweilige Teilströmung des Frischgases in den dazugehörigen Brennraum 12 strömen kann.

Das Frischgas ermöglicht eine Verbrennung des (gesteuert von der Steuervorrichtung 26) mittels Injektoren (nicht dargestellt) den Brennräumen 12 direkt zugeführten Kraftstoffs (alternativ kann beispielsweise auch eine Saugrohreinspritzung vorgesehen sein). Eine Entzündung des Kraftstoff-Frischgas-Gemisches erfolgt dabei durch Zündfunken, die, gesteuert durch die Steuervorrichtung 26, mittels mindestens jeweils einer Zündkerze (nicht dargestellt) erzeugt werden. Das bei der Verbrennung erzeugte Abgas wird über einen Abgasstrang 48 der Brennkraftmaschine abgeführt.

Das Kraftfahrzeug umfasst weiterhin einen Bremskraftverstärker 50, der dazu dient, den hydraulischen Druck, der von dem Fahrer des Kraftfahrzeugs durch ein Betätigen eines Bremspedals 62, in einem Bremssystem des Kraftfahrzeugs erzeugt wird, zu verstärken. Hierzu bildet der Bremskraftverstärker 50 eine Arbeitskammer 52 und eine Unterdruckkammer 54 aus, in denen infolge eines geöffneten Druckausgleichsventils 64 ein ausgeglichener pneumatischer Druck herrscht, sofern das Bremspedal 62 nicht betätigt ist. Erfolgt dagegen eine Betätigung des Bremspedals 62, strömt über ein dann geöffnetes Belüftungsventil 58 Umgebungsluft in die Arbeitskammer 52 des Bremskraftverstärkers 50, wodurch eine Verstärkung der von dem Fahrer auf das Bremspedal 62 ausgeübten Betätigungskraft 60 realisiert wird. Damit ist jedoch eine Erhöhung des pneumatischen Drucks in der Arbeitskammer 52 und infolge eines Druckausgleichs über das nach einer Entlastung des Bremspedals 62 wieder geöffnete Druckausgleichsventil 64 auch in der Unterdruckkammer 54 des Bremskraftverstärkers 50 verbunden. Diese Druckerhöhung in dem Bremskraftverstärker 50 wird in einem befeuerten Betrieb oder bei einem unbefeuerten Mitschleppen (Schubbetrieb) des Verbrennungsmotors 10 wieder rückgängig gemacht, indem ein Druckgefälle über einer Verbindungsleitung 68 zwischen der Unterdruckkammer 54 des Bremskraftverstärkers 50 und dem Saugrohr 38 des Verbrennungsmotors 10 ausgenutzt wird, um die Unterdruckkammer 54 und damit auch die Arbeitskammer 52 wieder so weit zu evakuieren, dass ein Druckausgleich zwischen diesen Kammern und dem Saugrohr 38 hergestellt ist. Ein in die Verbindungsleitung 68 integriertes Rückschlagventil 66 ermöglicht dabei ein Überströmen von Frischgas in der entsprechenden Strömungsrichtung und verhindert ein Überströmen von Frischgas von dem Saugrohr 38 in die Unterdruckkammer 54 bei einem temporären Überdruck in dem Saugrohr 38.

Für das Kraftfahrzeug ist die Möglichkeit eines segelnden Betriebs vorgesehen. Dazu wird, wenn von dem Fahrer bei rollendem beziehungsweise sich bewegendem Kraftfahrzeug infolge eines Entlastens des zuvor betätigten Fahrpedals 36 die Lastanforderung an den Verbrennungsmotor 10 vollständig zurückgenommen wurde, die Kupplung 24 durch eine entsprechende Ansteuerung mittels der Steuervorrichtung 26 (vollständig) geöffnet, um den Verbrennungsmotor 10 von dem Antriebsstrang (umfassend das Schaltgetriebe 22, die Kupplung 24 und die angetriebene(n) Achse(n)) zu entkoppeln. Weiterhin wird dann eine Befeuerung des Verbrennungsmotors 10 beendet, indem kein Kraftstoff mehr in die Brennräume 12 eingespritzt und auch keine Zündfunken mittels der Zündkerzen mehr erzeugt werden. Die Drosselklappe 34 wird dabei in eine Stellung bewegt oder in einer solchen Stellung gehalten, in der diese den entsprechenden Abschnitt des Ansaugabschnitts 32 weitestmöglich beziehungsweise vollständig verschließt. Ein solches Schließen oder Geschlossenhalten der Drosselklappe 34 bei einer Initiierung des Segelns ist jedoch nur dann vorgesehen, wenn der Druck in der Arbeitskammer 52 und der Unterdruckkammer 54 des Bremskraftverstärkers 50 oberhalb eines unteren Grenzwerts (z.B. ca. 250 mbar (absolut), was einem Unterdruck in dem Bremskraftverstärker in Höhe von ca. 750 mbar im Vergleich zu einem Umgebungsdruck in Höhe von ca. 1 bar entspricht) eines definierten Sollbereichs liegt. Dies wird mittels eines Drucksensors 56, der beispielsweise in der Arbeitskammer 52 des Bremskraftverstärkers 50 angeordnet sein kann, ermittelt.

Ein Öffnen der Kupplung 24 und damit ein Entkoppeln des Verbrennungsmotors 10 von dem Antriebsstrang erfolgt aufgrund der Bewegung des Kraftfahrzeugs bei Drehzahlen des Verbrennungsmotors 10, die größer als die Leerlaufdrehzahl (z.B. ca. 800 1/min) des Verbrennungsmotors 10 sind. Infolge der nicht mehr erfolgenden Befeuerung des Verbrennungsmotors 10 und der Entkopplung von dem Antriebsstrang wird dieser nach einer Initiierung eines Segelns noch bis zum Erreichen des Stillstands (Drehzahl: null) auslaufen, was in Kombination mit dem weitestmöglichen Schließen oder Geschlossenhalten der Drosselklappe 34 ausgenutzt wird, um den Druck innerhalb des Bremskraftverstärkers 50 abzusenken, sofern dieser oberhalb des unteren Grenzwerts des definierten Sollbereichs liegt.

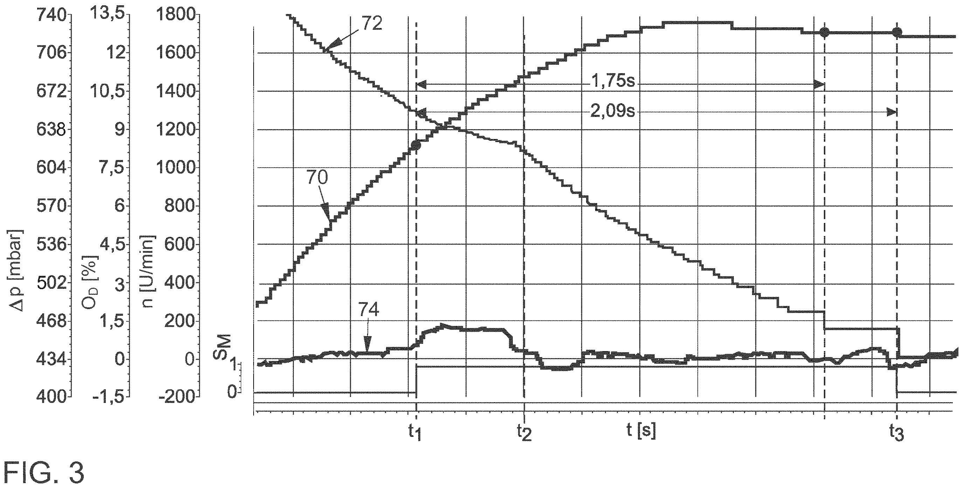

Die Fig. 3 verdeutlicht diese erfindungsgemäße Maßnahme für eine beispielhafte Betriebsphase eines erfindungsgemäßen Kraftfahrzeugs. Die Fig. 3 zeigt dabei den zeitlichen Verlauf des Unterdrucks Δp in dem Bremskraftverstärker 50 (Verlaufslinie 70), d.h. der Druckdifferenz zwischen dem Umgebungsdruck und dem Druck in der Arbeitskammer 52 des Bremskraftverstärkers 50, den zeitlichen Verlauf der Drehzahl n des Verbrennungsmotors 10 (Verlaufslinie 72) und den zeitlichen Verlauf des Öffnungsumfangs O_{D} der Drosselklappe 34 in Prozent (Verlaufslinie 74), wobei ein Öffnungsumfang O_{D} von 0% einer weitestmöglich geschlossenen, d.h. den Frischgasstrang 28 weitestmöglich versperrenden Stellung und ein Öffnungsumfang von 100% einer weitestmöglich geöffneten, d.h. den Frischgasstrang 28 weitestmöglich freigebenden Stellung entspricht. Weiterhin ist in der Fig. 3 anhand der Verlaufslinie 76 noch der Zeitraum aufgezeigt, innerhalb dessen von der Steuervorrichtung 26 ein Nichtbetrieb des Verbrennungsmotors 10 angefordert (S_{M}) wird. Dabei entspricht der Wert 1 einer solchen Anforderung eines Nichtbetriebs des Verbrennungsmotors 10 und der Wert 0 keiner solchen Anforderung eines Nichtbetriebs des Verbrennungsmotors 10.

In der Fig. 3 ist zu erkennen, dass der Verbrennungsmotor 10 zunächst in einem Schubbetrieb, d.h. unbefeuert, mit weitestmöglich geschlossener Drosselklappe 34 und mit einer geschlossenen Kupplung und folglich mit einer Ankopplung an den Antriebsstrang, betrieben wird. Mit diesem Schubbetrieb ist eine kontinuierliche Verringerung der Drehzahl n verbunden. Gleichzeitig erfolgt ein Anstieg des Unterdrucks Δp infolge einer Evakuierung des Bremskraftverstärkers 50, da der Druck (absolut) innerhalb des Bremskraftverstärkers 50 aufgrund einer vorherigen, in der Fig. 3 nicht sichtbaren Betätigung des Bremspedals 62 und damit des Bremskraftverstärkers 50 oberhalb eines unteren Grenzwerts liegt, der einem Unterdruck Δp von ca. 720 mbar entspricht. Zu einem Zeitpunkt t₁ wird von der Steuervorrichtung ein Nichtbetrieb des Verbrennungsmotors 10 angefordert (S_{M} = 1). Als Folge davon wird eine Befeuerung des Verbrennungsmotors 10 unterbrochen und zudem die Kupplung 24 geöffnet, um den Verbrennungsmotor 10 von dem Antriebsstrang zu entkoppeln. Diese Entkopplung ist zu einem Zeitpunkt t₂ vollständig erfolgt, was in der Fig. 3 durch einen ab dann größeren Gradienten bezüglich der Verringerung der Drehzahl n ersichtlich ist. Die Fig. 3 zeigt, dass in dem Zeitraum zwischen t₁ und t₂ die Drosselklappe 34 geringfügig bis zu einem Öffnungsumfang O_{D} von ca. 1,4% geöffnet wird. Dies ist aber grundsätzlich nicht erforderlich und es ist möglich, die Drosselklappe 34, wie auch in dem vorausgegangenen Schubbetrieb, auch in diesem Zeitraum t₁ bis t₂ geschlossen zu halten. Erfindungsgemäß ist vorgesehen, dass, da der Druck in dem Bremskraftverstärker 50 zum Zeitpunkt t₁ noch oberhalb des unteren Grenzwerts des Sollbereichs liegt, mit der Initiierung des Segelns, d.h. spätestens zum Zeitpunkt t₂, die Drosselklappe 34 weitestmöglich geschlossen wird oder geschlossen gehalten wird, wie dies auch in der Fig. 3 erkennbar ist. Dadurch kann ein Ansteigen des Unterdrucks Δp mit einem Gradienten erreicht werden, der in etwa dem Gradienten während des vorausgegangenen Schubbetrieb entspricht. Dieser Anstieg der Druckdifferenz erfolgt so lange, bis der Druck in dem Bremskraftverstärker 50 infolge eines Ausgleichs mit dem Druck in dem Saugrohr 38 den unteren Grenzwert des Sollbereichs, der einem Unterdruck Δp von ca. 720 mbar entspricht, erreicht hat. Danach verändert sich der Druck in dem Bremskraftverstärker 50 mit Ausnahme von möglichen Leckagen nicht mehr, solange nicht der Bremskraftverstärker 50 erneut betätigt wird. Zu einem Zeitpunkt t₃ wird von dem Steuergerät eine Erfüllung der Anforderung eines Nichtbetriebs des Verbrennungsmotors erkannt und diese beendet (S_{M} = 0), da zu diesem Zeitpunkt die Drehzahl n bis auf null abgesunken ist.

Vorgesehen ist, dass zu einem Zeitpunkt, der kurz nach dem Zeitpunkt t₃ liegt, die Drosselklappe 34 wieder ein Stück weit geöffnet wird, wodurch Frischgas in den zuvor infolge der weitestgehend geschlossenen Drosselklappe 34 und der noch andauernden Drehung des Verbrennungsmotors 10 evakuierten Ansaugabschnitt 32 des Frischgasstrangs 28 nachströmen kann. Dieses Nachströmen hat aufgrund des in die Verbindungsleitung 68 integrierten Rückschlagventils 66, das bei einem höheren Druck in dem Saugrohr 38 im Vergleich zu dem Druck in der Unterdruckkammer 54 des Bremskraftverstärkers 50 geschlossen ist, keine Auswirkungen auf den Druck in dem Bremskraftverstärker 50. Durch diese Maßnahme kann jedoch ein erneuter Start des Verbrennungsmotors 10 verbessert und insbesondere beschleunigt werden, weil dadurch den Brennräumen 12 des Verbrennungsmotors 10 unmittelbar zu dem vorgesehenen Startzeitpunkt Frischgas in ausreichender Menge zugeführt werden kann.

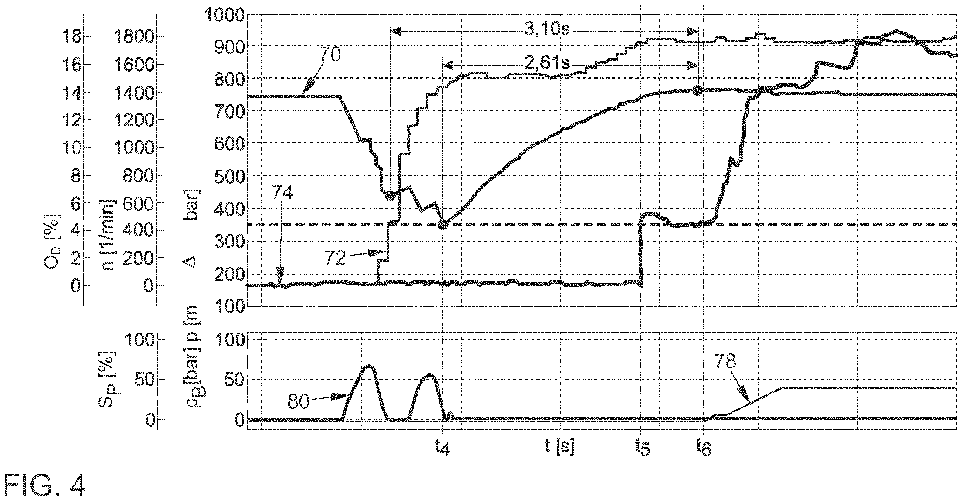

Eine weitere erfindungsgemäße Maßnahme, die dazu dient, einen ausreichenden Unterdruck in dem Bremskraftverstärker 50 sicherzustellen, besteht darin, den unbefeuerten Verbrennungsmotor 10 ausgehend von einem segelnden Betrieb des Kraftfahrzeugs anzuschleppen, wenn eine Verzögerung des Kraftfahrzeugs vorgesehen ist. Auch dabei soll die Drosselklappe 34 weitestmöglich geschlossen werden oder geschlossen gehalten werden, um durch die Förderung von Frischgas aus dem Ansaugabschnitt 32 des Frischgasstrangs 28 in den Abgasstrang 48 mittels des Verbrennungsmotors 10 in Kombination mit der Verhinderung eines Nachströmens von Frischgas in den Ansaugabschnitt 32 mittels der weitestmöglich geschlossenen Drosselklappe 34 bedarfsweise die Unterdruckkammer 54 des Bremskraftverstärkers 50 zu evakuieren. Diese Maßnahme ist in der Fig. 4 für eine beispielhafte Betriebsphase eines erfindungsgemäßen Kraftfahrzeugs dargestellt.

Die Fig. 4 zeigt für dieselbe Zeitdauer (entlang der Horizontalachse) in einem oberen Diagramm den Verlauf des Öffnungsumfangs O_{D} der Drosselklappe 34 (Verlaufslinie 74), den Verlauf der Drehzahl n des Verbrennungsmotors (Verlaufslinie 72) und den Verlauf des Unterdrucks Δp in dem Bremskraftverstärker 50 (Verlaufslinie 70) sowie in einem unteren Diagramm den Verlauf der Stellung S_{P} des Fahrpedals 36 in Prozent (Verlaufslinie 78), wobei eine Stellung von 0% einer (vollständigen) Entlastung und eine Stellung von 100% einer vollständig ausgelenkten beziehungsweise durchgetretenen Stellung des Fahrpedals 36 entspricht. Weiterhin ist in dem unteren Diagramm der Fig. 4 der Verlauf eines hydraulischen Drucks p_{B} in dem Bremssystem des Kraftfahrzeugs dargestellt (Verlaufslinie 80).

Gemäß der Fig. 4 wird das Kraftfahrzeug zunächst segelnd betrieben, d.h. dieses rollt bei nicht befeuertem und von dem Antriebsstrang abgekoppeltem Verbrennungsmotor 10. Das Fahrpedal 36 ist dabei vollständig entlastet, die Drosselklappe 34 weitestmöglich geschlossen und die Drehzahl n des Verbrennungsmotors 10 beträgt null. Anschließend erfolgt eine kurzzeitig aufeinanderfolgende, zweimalige Betätigung des Bremspedals 62, was durch temporäre Erhöhungen des Drucks p_{B} erkennbar ist. Dadurch sinkt der Unterdruck Δp ausgehend von einem vorherigen Maximalwert (ca. 750 mbar), wobei kurz nach der zweiten Betätigung des Bremspedals 62 ein unterer Schwellwert für den Unterdruck bei ca. 350 mbar erreicht wird. Dieser untere Schwellwert entspricht einem oberen Grenzwert für den Sollbereich des (absoluten) Drucks in dem Bremskraftverstärker 50, ab dem eine Evakuierung des Bremskraftverstärkers 50 notwendig ist, um auch eine nachfolgende Bremsung mit ausreichender Bremsleistung sicherzustellen. Um eine solche Evakuierung zu realisieren, wird zumindest dann, wenn eine weitere Verzögerung des Kraftfahrzeugs vorgesehen ist, ein Anschleppen des unbefeuerten Verbrennungsmotors 10 bewirkt, dessen Drehzahl n dementsprechend ansteigt. Gleichzeitig wird die Drosselklappe 34 in der weitestmöglich geschlossenen Stellung gehalten (O_{D} ≈ 0%). Dies erfolgt so lange, bis der vorgesehene Maximalwert für den Unterdruck Δp wieder erreicht ist (Zeitpunkt t₅). Nun erfolgt ein teilweises Öffnen der Drosselklappe 34 bis auf einen Wert von ca. 5%. Dies dient wiederum dazu, einen möglichen nachfolgenden Start des Verbrennungsmotors 10 zu verbessern. Die Fig. 4 zeigt einen solchen Start des Verbrennungsmotors 10 ab dem Zeitpunkt t₆, was durch eine Stellung des Fahrpedals S_{P} größer 0% und durch einen weitergehend vergrößerten Öffnungsumfang O_{D} der Drosselklappe 34 gekennzeichnet ist.

### Bezugszeichenliste

- 10: Verbrennungsmotor
- 12: Brennraum
- 14: Zylinder
- 16: Zylinderkurbelgehäuse
- 18: Kolben
- 20: Kurbelwelle
- 22: Schaltgetriebe
- 24: Kupplung
- 26: Steuervorrichtung
- 28: Frischgasstrang
- 30: Luftfilter
- 32: Ansaugabschnitt
- 34: Frischgasregelelement / Drosselklappe
- 36: Lastanforderungsvorrichtung / Fahrpedal
- 38: Saugrohr
- 40: Frischgaseinlass des Saugrohrs
- 42: Frischgasauslass des Saugrohrs
- 44: Zylinderkopf
- 46: Einlasskanal
- 48: Abgasstrang
- 50: Bremskraftverstärker
- 52: Arbeitskammer des Bremskraftverstärkers
- 54: Unterdruckkammer des Bremskraftverstärkers
- 56: Drucksensor
- 58: Belüftungsventil
- 60: Betätigungskraft
- 62: Bremspedal
- 64: Druckausgleichsventil
- 66: Rückschlagventil
- 68: Verbindungsleitung
- 70: Verlauf des Unterdrucks in dem Bremskraftverstärker
- 72: Verlauf der Drehzahl des Verbrennungsmotors
- 74: Verlauf des Öffnungsumfangs der Drosselklappe
- 76: Verlauf der Anforderung eines Nichtbetriebs des Verbrennungsmotors
- 78: Verlauf der Stellung des Fahrpedals
- 80: Verlauf des Drucks p_{B} in dem Bremssystem des Kraftfahrzeugs

- Δp: Unterdruck in dem Bremskraftverstärker
- n: Drehzahl des Verbrennungsmotors
- O_{D}: Öffnungsumfang der Drosselklappe
- S_{M}: (keine) Anforderung eines Nichtbetriebs des Verbrennungsmotors
- S_{P}: Stellung des Fahrpedals
- p_{B}: Druck in dem Bremssystem des Kraftfahrzeugs

## Patentansprüche

1. Verfahren zum Betreiben eines Kraftfahrzeugs mit einem Verbrennungsmotor (10) und einem Bremskraftverstärker (50), in dem ein Unterdruck durch eine fluidleitende Verbindung des Bremskraftverstärkers (50) mit einem zwischen einem Frischgasregelelement (34) und dem Verbrennungsmotor (10) liegenden Ansaugabschnitt (32) eines Frischgasstrangs (28) des Verbrennungsmotors (10) erzeugt werden kann, wobei zumindest zeitweise bei einer Zurücknahme einer Lastanforderung an den Verbrennungsmotor (10) ein Segeln des Kraftfahrzeugs initiiert wird, indem eine Befeuerung des Verbrennungsmotors (10) beendet und der Verbrennungsmotor (10) von zumindest einem Teil eines Antriebsstrangs des Kraftfahrzeugs entkoppelt wird, **dadurch gekennzeichnet, dass** bei der Initiierung des Segelns und/oder bei einem Anschleppen des unbefeuerten Verbrennungsmotors (10) ausgehend von einem Segeln, wobei dieses Anschleppen mit dem Zweck der Verzögerung des Kraftfahrzeugs oder mittels einer Anschleppvorrichtung erfolgt, das Frischgasregelelement (34) weitestmöglich geschlossen wird oder geschlossen gehalten wird, um den Druck in dem Bremskraftverstärker (50) innerhalb eines Sollbereichs zu halten.

2. Verfahren gemäß Anspruch 1, **dadurch gekennzeichnet, dass** das Frischgasregelelement (34) nach einem Erreichen eines unteren Grenzwerts des Sollbereichs geöffnet wird.

3. Verfahren gemäß Anspruch 1 oder 2, **dadurch gekennzeichnet, dass** das Betätigen des Frischgasregelelements (34) und/oder das Anschleppen des unbefeuerten Verbrennungsmotors (10) in Abhängigkeit von einem Druck in dem Bremskraftverstärker (50) gesteuert oder geregelt wird.

4. Verfahren gemäß einem der vorhergehenden Ansprüche, **gekennzeichnet durch** eine Anwendung bei einem Kraftfahrzeug, das keinen oder einen unterdimensionierten separaten Unterdruckerzeuger zur Erzeugung eines Unterdrucks in dem Bremskraftverstärker (50) aufweist.

5. Kraftfahrzeug mit einem Verbrennungsmotor (10), einer automatisch betätigbaren Kupplung (24), mittels der der Verbrennungsmotor (10) mit einem Antriebsstrang des Kraftfahrzeugs koppelbar ist, einer Lastanforderungsvorrichtung (36) zur Steuerung der Lastanforderung an den Verbrennungsmotor (10), einem Bremskraftverstärker (50), in dem ein Unterdruck durch eine fluidleitende Verbindung des Bremskraftverstärkers (50) mit einem zwischen einem Frischgasregelelement (34) und dem Verbrennungsmotor (10) liegenden Abschnitt eines Frischgasstrangs (28) des Verbrennungsmotors (10) erzeugbar ist, und einer Steuervorrichtung (26), wobei mittels der Steuervorrichtung (26) zumindest zeitweise bei einer Zurücknahme der Lastanforderung mittels der Lastanforderungsvorrichtung (36) ein Segeln des Kraftfahrzeugs vorgesehen wird, bei dem eine Befeuerung des Verbrennungsmotors (10) beendet und der Verbrennungsmotor (10) von zumindest einem Teil des Antriebsstrangs entkoppelt ist, **dadurch gekennzeichnet, dass** bei der Initiierung des Segelns und/oder bei einem Anschleppen des Verbrennungsmotors (10) ausgehend von einem Segeln, wobei dieses Anschleppen mit dem Zweck der Verzögerung des Kraftfahrzeugs oder mittels einer Anschleppvorrichtung erfolgt, das Frischgasregelelement (34) mittels der Steuervorrichtung (26) weitestmöglich geschlossen wird oder geschlossen gehalten wird.

6. Kraftfahrzeug gemäß Anspruch 5, **gekennzeichnet durch** einen signalführend mit der Steuervorrichtung (26) verbundenen Drucksensor (56) zur Ermittlung eines von einem Druck in dem Bremskraftverstärker (50) abhängigen Druckmesswerts.

7. Kraftfahrzeug gemäß Anspruch 5 oder 6, **dadurch gekennzeichnet, dass** kein oder ein unterdimensionierter separater Unterdruckerzeuger zur Erzeugung eines Unterdrucks in dem Bremskraftverstärker (50) vorgesehen ist.

## Claims

1. Method for operating a motor vehicle having an internal combustion engine (10) and having a brake force booster (50) in which a negative pressure can be generated by means of a fluid-conducting connection of the brake force booster (50) to an intake section (32), which is situated between a fresh-gas control element (34) and the internal combustion engine (10), of a fresh-gas tract (28) of the internal combustion engine (10), wherein, at least temporarily in the event of a withdrawal of a load demand on the internal combustion engine (10), coasting of the motor vehicle is initiated by virtue of firing of the internal combustion engine (10) being ended and the internal combustion engine (10) being decoupled from at least a part of a drivetrain of the motor vehicle, **characterized in that**, upon the initiation of the coasting and/or upon cranking of the non-fired internal combustion engine (10) proceeding from a coasting state, wherein said cranking is performed for the purposes of decelerating the motor vehicle or by means of a cranking device, the fresh-gas control element (34) is closed to the furthest possible extent, or is held closed, in order to keep the pressure in the brake force booster (50) within a setpoint range.

2. Method according to Claim 1, **characterized in that** the fresh-gas control element (34) is opened after a lower threshold value of the setpoint region is reached.

3. Method according to Claim 1 or 2, **characterized in that** the actuation of the fresh-gas control element (34) and/or the cranking of the non-fired internal combustion engine (10) is controlled in open-loop or closed-loop fashion in a manner dependent on a pressure in the brake force booster (50).

4. Method according to any one of the preceding claims, **characterized by** use in a motor vehicle which has no separate negative-pressure generator, or an underdimensioned separate negative-pressure generator, for generating a negative pressure in the brake force booster (50).

5. Motor vehicle having an internal combustion engine (10), having an automatically actuatable clutch (24) by means of which the internal combustion engine (10) can be coupled to a drivetrain of the motor vehicle, having a load demand device (36) for controlling the load demand on the internal combustion engine (10), having a brake force booster (50) in which a negative pressure can be generated by means of a fluid-conducting connection of the brake force booster (50) to a section, which is situated between a fresh-gas control element (34) and the internal combustion engine (10), of a fresh-gas tract (28) of the internal combustion engine (10), and having a control device (26), wherein, by means of the control device (26), at least temporarily in the event of a withdrawal of the load demand by means of the load demand device (36), coasting of the motor vehicle is provided, in the case of which firing of the internal combustion engine (10) is ended and the internal combustion engine (10) is decoupled from at least a part of the drivetrain, **characterized in that**, upon the initiation of the coasting and/or upon cranking of the internal combustion engine (10) proceeding from a coasting state, wherein said cranking is performed for the purposes of decelerating the motor vehicle or by means of a cranking device, the fresh-gas control element (34) is closed to the furthest possible extent, or is held closed, by means of the control device (26).

6. Motor vehicle according to Claim 5, **characterized by** a pressure sensor (56), which has a signaltransmitting connection to the control device (26), for ascertaining a pressure measurement value which is dependent on a pressure in the brake booster (50) .

7. Motor vehicle according to Claim 5 or 6, **characterized in that** no separate negative-pressure generator, or an underdimensioned separate negative-pressure generator, is provided for generating a negative pressure in the brake force booster (50).

## Revendications

1. Procédé de fonctionnement d'un véhicule automobile comprenant un moteur à combustion interne (10) et un servofrein (50), procédé dans lequel une pression négative peut être générée à travers une liaison fluidique du servofrein (50) comprenant une portion d'admission (32), située entre un élément de régulation de gaz frais (34) et le moteur à combustion interne (10), d'un élément de régulation de gaz frais (28) du moteur à combustion interne (10), la marche en roue libre du véhicule automobile étant déclenchée au moins temporairement lorsqu'une demande de charge du moteur à combustion interne (10) est supprimée, par suppression de l'allumage du moteur à combustion interne (10) et par désaccouplement du moteur à combustion interne (10) d'au moins une partie d'une chaîne cinématique du véhicule automobile, **caractérisé en ce que**, lors du déclenchement de la marche en roue libre et/ou lors du remorquage du moteur à combustion interne non alimenté (10) à partir de la marche en roue libre, ce remorquage étant effectué afin de décélérer le véhicule automobile ou au moyen d'un dispositif de remorquage, l'élément de régulation de gaz frais (34) est autant que possible fermé ou est maintenu fermé afin de maintenir la pression dans le servofrein (50) dans une plage cible.

2. Procédé selon la revendication 1, **caractérisé en ce que** l'élément de régulation de gaz frais (34) est ouvert après avoir atteint une valeur limite inférieure de la plage cible.

3. Procédé selon la revendication 1 ou 2, **caractérisé en ce que** l'actionnement de l'élément de régulation de gaz frais (34) et/ou le remorquage du moteur à combustion interne non alimenté (10) est commandé ou régulé en fonction d'une pression dans le servofrein (50) .

4. Procédé selon l'une des revendications précédentes, **caractérisé en ce qu'**il est utilisé dans un véhicule automobile qui ne comporte pas de générateur de pression négative ou qui comporte un générateur de pression négative séparé sous-dimensionné pour générer une pression négative dans le servofrein (50) .

5. Véhicule automobile comprenant un moteur à combustion interne (10), un embrayage à commande automatique (24) permettant d'accoupler le moteur à combustion interne (10) à une chaîne cinématique du véhicule automobile, un dispositif de demande de charge (36) destiné à commander la demande de charge du moteur à combustion interne (10), un servofrein (50) dans lequel une pression négative peut être générée à travers une liaison fluidique du servofrein (50) comprenant une portion d'une conduite de gaz frais (28) du moteur à combustion interne (10) qui est située entre un élément de régulation de gaz frais (34) et le moteur à combustion interne (10), et un dispositif de commande (26), une marche en roue libre du véhicule automobile étant prévue au moyen du dispositif de commande (26) au moins temporairement lorsque la demande de charge est supprimée au moyen du dispositif de demande de charge (36), marche en roue libre pendant laquelle le moteur à combustion interne (10) est arrêté et le moteur à combustion interne (10) est désaccouplé d'au moins une partie de la chaîne cinématique, **caractérisé en ce que**, lors du déclenchement de la marche en roue libre et/ou lors du remorquage du moteur à combustion interne (10) à partir de la marche en roue libre, ce remorquage étant effectué pour décélérer le véhicule automobile ou au moyen d'un dispositif de remorquage, l'élément de régulation de gaz frais (34) est autant que possible fermé ou maintenu fermé au moyen du dispositif de commande (26).

6. Véhicule automobile selon la revendication 5, **caractérisé par** un capteur de pression (56) relié en transmission de signal au dispositif de commande (26) pour déterminer une valeur de mesure de pression dépendant d'une pression dans le servofrein (50).

7. Véhicule automobile selon la revendication 5 ou 6, **caractérisé en ce que**, pour générer une pression négative dans le servofrein (50), il n'est prévu aucun générateur de pression négative ou il est prévu un générateur de pression négative séparé sous-dimensionné.
